# EUROPÄISCHE PATENTSCHRIFT

(11) **EP 2 559 038 B1**
(45) Veröffentlichungstag und Bekanntmachung des Hinweises auf die Patenterteilung: **17.10.2018**
(21) Anmeldenummer: 11711271.4
(22) Anmeldetag: 21.03.2011
(51) Int. Cl.: H01F 5/04, H01F 41/10

(54) **SPULE UND BREMSE**
COIL AND BRAKE
BOBINE ET FREIN

(30) Priorität: 13.04.2010 DE 102010014860
(43) Veröffentlichungstag der Anmeldung: 20.02.2013
(73) Patentinhaber: Sew-Eurodrive GmbH & Co. KG, 76646 Bruchsal (DE)
(72) Erfinder: HEINRICH, Pascal, 67480 Roeschwoog (FR); BURKARDT, Alexandre, 67240 Kaltenhouse (FR)
(86) Internationale Anmeldenummer: PCT/EP2011/001373
(87) Internationale Veröffentlichungsnummer: WO 2011/128021

(56) Entgegenhaltungen:
- WO-A1-2005/109606
- DE-A1-102006 034 049
- DE-B3-102004 022 254
- GB-A- 2 113 652

## Beschreibung

Die Erfindung betrifft eine Spule und eine Bremse.

Spulenträger für mit Wicklungsdraht bewickelte Spulen sind allgemein bekannt.

Aus der DE 36 13 294 ist eine Bremsspule mit einem Mittelabgriff (Fig. 4, Bezugszeichen 6) bekannt, die als Bremse für einen Elektromotor verwendbar ist. Nachteilig ist dabei, dass die Fertigung aufwendig und kostspielig ist. Dabei ist wichtig, dass jeder zusätzliche Kontakt des Wicklungsdrahtes beim Herstellen Aufwand und Kosten verursacht.

Aus der DE 79 23 585 U1 ist ein Verbinden von Draht bekannt, wobei der Wicklungsdraht der Spule um das stiftförmige Ende mehrfach herumgewickelt werden muss ("herumschlingen" Seite 4, 3. Absatz, Zeile 4 - 5) und dann angelötet werden muss. Dies ist sehr aufwendig und kostspielig.

Aus der DE 34 07 758 A1 ist ein Haken an einem Anschlussstück bekannt, der zum Sichern gegen das Herausziehen vorgesehen ist (Seite 9, Zeile 11). Nachteilig ist wiederum, dass das Verbinden des Wicklungsdrahtes sehr aufwendig und kompliziert ist.

Aus der DE 10 2004 022 254 B3 ist eine Hülse bekannt, die die Funktion eines Kontakthakens ausführt, also eine elektrische Verbindung zwischen Wicklungsdraht und Litze herstellt.

Aus der DE 10 2006 034 049 A1 ist eine Spulenwicklung bekannt, bei der eine Drahtführung vorhanden ist.

Aus der GB 2 113 652 A ist eine Spulenwicklung mit Umlenkpfosten bekannt, bei der aber keine radiale Begrenzung nach außen gemacht werden kann.

Aus der WO 2005/109606 A1 ist als nächstliegender Stand der Technik eine Wicklung bekannt, bei der ein Umlenkpfosten in radialer Richtung sich erstreckt und eine Verdickung mit hoher Wandstärke aufweist, wobei die Verdickung sich tangential erstreckt. Ebenso ist dort ein sich axial erstreckender Begrenzungspfosten bekannt.

Der Erfindung liegt daher die Aufgabe zugrunde, eine Spule weiterzubilden, um sie kostengünstiger und einfacher zu fertigen, insbesondere samt Kontaktierung. Dies betrifft besonders auch Spulen mit mehreren Abgriffen, insbesondere mindestens einem Mittelabgriff.

Erfindungsgemäß wird die Aufgabe bei der Spule nach den in Anspruch 1 und bei der Bremse nach den in Anspruch 10 angegebenen Merkmalen gelöst.

Wichtige Merkmale der Erfindung bei der Spule gemäß Anspruch 1 sind, dass bei der Spule, umfassend zumindest einen Spulenträger und einen Wicklungsdraht, wobei eine axiale Richtung durch die Wicklungsachse der Spulenwicklung definiert ist, der Wicklungsdraht aus dem Wicklungsbereich der Spule um einen Umlenkpfosten herum, insbesondere zur Zugentlastung, und nachfolgend durch einen in radialer Richtung nach innen und nach außen begrenzten Raumbereich geführt ist zu einem Kontakthaken, wobei die Begrenzung mittels der Ausformung des Spulenträgers ausgeführt ist.

Von Vorteil ist dabei, dass eine Zugentlastung realisiert ist, so dass auch bei Herstellen der Verbindung des Wicklungsdrahtes mit der Hülse, also Kontakthaken, die Spulenwicklung sich nicht lockert oder aufgelöst wird. Denn der Teil des Wicklungsdrahtes, welcher aus dem Wicklungsbereich der Spule kommt, wird unter mechanischer Spannung gehalten. Mittels des begrenzten Raumbereichs für den Teil des Wicklungsdrahtes, der vom Umlenkpfosten abzweigt, ist eine Mindestumlenkung , also auch ein Mindestumlenkwinkel für den Wicklungsdraht um den Umlenkpfosten herum erreicht. Somit ist der Reibwert des Wicklungsdrahtes noch groß genug, um die Spannung zum Wicklungsbereich hin aufrecht zu erhalten.

Erfindungsgemäß ist zur Herstellung der radial außen vorgesehenen Begrenzung ein Begrenzungspfosten am Spulenträger ausgeformt.

Erfindungsgemäß erstreckt sich der Umlenkpfosten in axialer Richtung, also parallel zur Wicklungsachse der Spulenwicklung. Von Vorteil ist dabei, dass in radialer Richtung Bauraum eingespart wird und somit der maximale Außendurchmesser der Spule reduzierbar ist. Außerdem ist der Pfosten besser geschützt und somit gegen Abbrechen besser gesichert.

Erfindungsgemäß ist der Umlenkfposten an seinem axialen Endbereich verdickt und/oder mit einem Begrenzungswandbereich ausgeführt. Von Vorteil ist dabei, dass der Wicklungsdraht geführt ist und nicht aus dem Bereich des Pfostens herausrutschen kann.

Erfindungsgemäß ist zur Herstellung der radial innen vorgesehenen Begrenzung eine Verstärkungsrippe, insbesondere eine geschwungen, insbesondere nicht geradlinig, verlaufende, am Spulenträger ausgeformt. Von Vorteil ist dabei, dass die Begrenzung auch zur mechanischen Verstärkung, also Erhöhung der Steifigkeit des Spulenträgers, beiträgt.

Bei einer vorteilhaften Ausgestaltung ist der Wicklungsdraht aus dem Wicklungsbereich der Spule durch eine Kerbe oder radiale Vertiefung in einem Wandbereich des Spulenträgers verlegt und somit zum Umlenkpfosten hin geführt. Von Vorteil ist dabei, das die Führung des - Wicklungsdrahtes weiter verbessert ist, ohne dass radialer zusätzlicher Bauraum notwendig wäre. Insbesondere ist der Wicklungsbereich durch den Wandbereich, in welchem die Kerbe oder radiale Vertiefung eingebracht ist, teilweise begrenzt.

Bei einer vorteilhaften Ausgestaltung ist der Wicklungsdraht mit dem Kontakthaken, also Hülse, elektrisch verbunden, insbesondere schweißverbunden, und am Kontakthaken ist ein Litzenkabel elektrisch verbunden, insbesondere schweißverbunden. Von Vorteil ist dabei, dass der zugentlastete Teil des Wicklungsdrahtes in einfacher Weise elektrisch verbindbar ist mit einem Litzenkabel.

Bei einer vorteilhaften Ausgestaltung ist der Kontakthaken in einer Ausnehmung des Spulenträgers eingeschoben angeordnet. Von Vorteil ist dabei, dass eine einfache Verbindungstechnik anwendbar ist.

Bei einer vorteilhaften Ausgestaltung weist die Spule zumindest einen Spulenträger und einem Wicklungsdraht auf, insbesondere einen zur elektrischen Isolierung lackierten Wicklungsdraht,
wobei der Spulenträger zumindest einen Kanal umfasst, insbesondere einen als Tasche ausgebildeten,
wobei mindestens eine Hülse mit dem Wicklungsdraht elektrisch verbunden ist,
wobei die Hülse mit einer elektrischen Leitung, insbesondere Litze eines Kabels, elektrisch verbunden ist,
wobei die Hülse verformbare Bereiche umfasst,
wobei zur Herstellung der elektrischen Verbindungen ein jeweiliger verformbarer Bereich derart verformbar ist, dass eine kraftschlüssige Verbindung vorgesehen ist und ein Verschweißen ausführbar ist.

Von Vorteil ist dabei, dass die Hülse eine kostengünstige elektrische Verbindungsart ermöglicht. Insbesondere ist die Hülse selbst als kostengünstiges Stanz-Biegeteil aus Blech herstellbar. Da sie verformbare Bereiche aufweist, sind mittels dieser Bereiche Wicklungsdraht-Abschnitte oder Litzen-Abschnitte einklemmbar, also kraftschlüssig verbindbar. Durch entsprechendes Erhitzen sind dann Schweißverbindungen herstellbar. Mittels weiterer verformbarer Bereiche sind auch andere Teile des Kabels einklemmbar und somit eine Zugentlastung für das Kabel mit Litze realisierbar.

Bei einer vorteilhaften Ausgestaltung ist die Hülse ein metallisches Stanz-Biegeteil. Insbesondere ist die Hülse zur Herstellung einer elektrischen Verbindung zwischen Wicklungsdraht und der elektrischen Leitung oder einer Litze geeignet ausgeführt. Von Vorteil ist dabei, dass ein leitfähiges Metall und ein zum Herstellen einer Schweißverbindung besonders gut geeignetes Metall auswählbar ist, das darüber hinaus kostengünstig ist und mittels eines Stanz-Biege-Prozesses herstellbar ist.

Bei einer vorteilhaften Ausgestaltung ist die Hülse im Spulenträger kraftschlüssig und/oder formschlüssig befestigbar. Insbesondere umfasst die Hülse mindestens einen Widerhaken, insbesondere zum Einhaken im Kanal. Von Vorteil ist dabei, dass die Befestigung mit einfachen und kostengünstigen Mitteln erreichbar ist.

Bei einer vorteilhaften Ausgestaltung umfasst die Hülse mindestens einen ersten Bereich, insbesondere einen als Zunge ausgebildeten Bereich, der als Auflage und/oder Führung für den Wicklungsdraht vorgesehen ist. Von Vorteil ist dabei, dass Fertigungsfehler verminderbar sind, da der Wicklungsdraht sicher und mit hoher Genauigkeit reproduzierbar positionierbar ist.

Bei einer vorteilhaften Ausgestaltung umfasst die Hülse zumindest einen zweiten Bereich, insbesondere einen als Zunge ausgebildeten Bereich, der zum kraftschlüssigen Verbinden mit dem Wicklungsdraht verformbar ist und zum Herstellen einer Schweißverbindung mit dem Wicklungsdraht vorsehbar ist. Von Vorteil ist dabei, dass mit einfachsten und kostengünstigsten Mitteln eine gute elektrische Verbindung vorsehbar ist.

Bei einer vorteilhaften Ausgestaltung umfasst die Hülse zumindest einen dritten Bereich, insbesondere einen als Zunge ausgebildeten Bereich, der zum kraftschlüssigen Verbinden mit einer Litze, insbesondere eines Kabels, verformbar ist und zum Herstellen einer Schweißverbindung mit der Litze vorsehbar ist. Von Vorteil ist dabei wiederum, dass mit einfachsten und kostengünstigsten Mitteln eine gute elektrische Verbindung vorsehbar ist.

Bei einer vorteilhaften Ausgestaltung umfasst die Hülse zumindest einen vierten Bereich, insbesondere einen als Zunge ausgebildeten Bereich, der zum kraftschlüssigen Verbinden mit einem Kabel, insbesondere mit der Isolierung des Kabels, verformbar ist und zum Herstellen einer Schweißverbindung mit der Litze vorsehbar ist. Von Vorteil ist dabei, dass mit einfachsten und kostengünstigsten Mitteln eine Zugentlastung vorsehbar ist.

Bei einer vorteilhaften Ausgestaltung ist die Lackierung des Wicklungsdrahtes beim Herstellen einer Schweißverbindung zumindest im Bereich der elektrischen Kontaktstelle entfernbar, insbesondere durch das beim Herstellen der Schweißverbindung auftretende Erhitzen. Von Vorteil ist dabei, dass kein spezieller Abisolier-Arbeitsgang notwendig ist, sondern das bloße Verschweißen ausreichend ist.

Bei einer vorteilhaften Ausgestaltung sind die Bereiche an einem Wandteil verbunden. Von Vorteil ist dabei, dass die Bereiche stabil zusammenhaltbar sind mittels des Wandteils.

Bei einer vorteilhaften Ausgestaltung umfasst die Spule einen Mittelabgriff. Von Vorteil ist dabei, dass besonders schnell schaltbare Bremse ausführbar sind.

Bei einer vorteilhaften Ausgestaltung umfasst die Spule Vergussmasse, insbesondere im Bereich des Kanals und/oder der Wicklung. Von Vorteil ist dabei, dass ein chemischer und mechanischer Schutz erreichbar ist. Außerdem sind auch die elektrischen Isolationswerte verbesserbar bei geeigneter Auswahl der Vergussmasse.

Bei einer vorteilhaften Ausgestaltung umfasst der Spulenträger eine Halterung für Wicklungsdraht und/oder Kabel. Von Vorteil ist dabei, dass die Halterung schon bei der Spritzgussherstellung des Spulenträgers herstellbar ist und somit kein weiterer Arbeitsgang notwendig ist.

Weitere Vorteile ergeben sich aus den Unteransprüchen.

Die Erfindung wird nun anhand von Abbildungen näher erläutert:
In der Figur 1 ist ein Ausschnitt des Spulenträger 1 im Bereich der Kontaktierung einer Litze mit einem Wicklungsdraht an einem Kontakthaken 6, herum in Schrägansicht gezeigt, wobei auch ein Umlenkpfosten 20 zur Zugentlastung des Wicklungsdrahts 2 gezeigt ist.

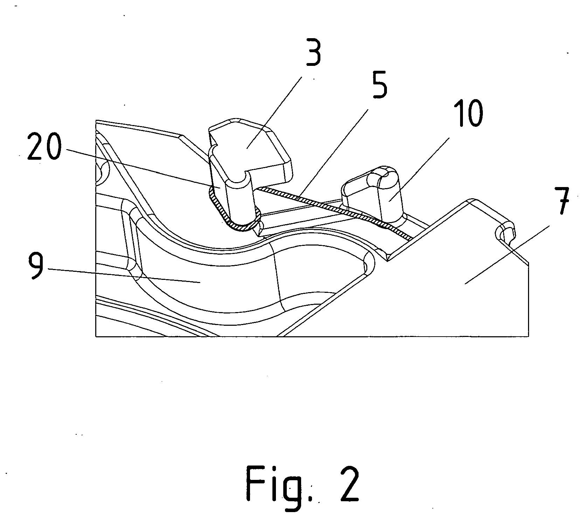

In der Figur 2 ist ein Ausschnitt des Spulenträger 1 um den Umlenkpfosten 20 herum in Schrägansicht gezeigt.

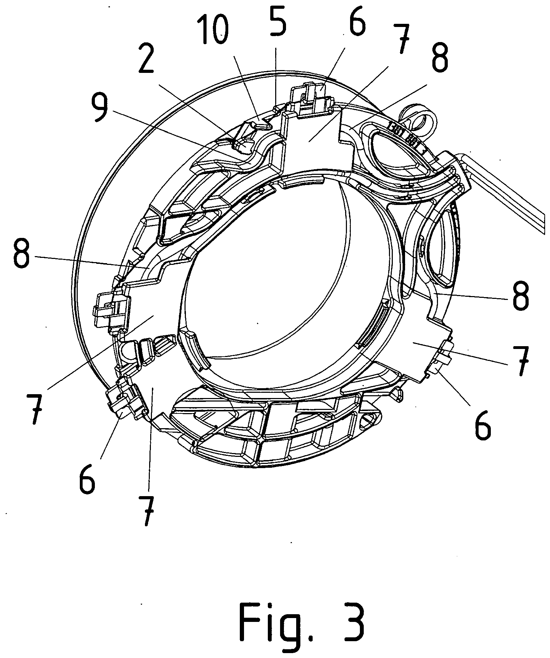

In der Figur 3 ist der gesamte Spulenträger 1 in Schrägansicht gezeigt.

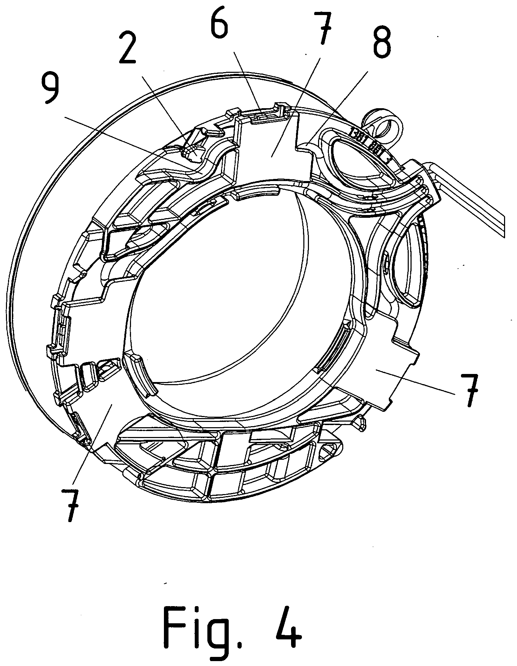

In der Figur 4 ist der Spulenträger 1 gezeigt, bevor die erfindungsgemäßen Kontakthaken 6 in die Aufnahmebereiche vollständig eingeschoben sind.

Am Umfang des Spulenträgers 1 sind vier Kontakthaken 6 vorgesehen, wovon einer für die Verbindung von zwei Wicklungsdrähten zur Herstellung eines Mittelabgriffs der Bremsspule geeignet ist. sind. Die drei weiteren Kontakthaken sind zur jeweiligen Kontaktierung von einer jeweiligen Litze vorgesehen.

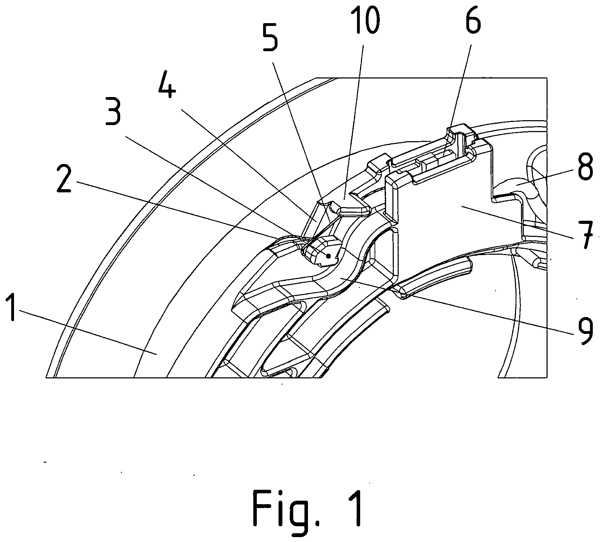

In der Figur 1 ist ein Spulenträger 1 einer Bremsspulenwicklung gezeigt. Er ist vorteiligerweise als Kunststoff-Spritzgussteil fertigbar und ist mit einer Bremsspulenwicklung bewickelbar. Die Bremsspule wird in einer elektromagnetisch betätigbaren Bremse vorgesehen. Hierzu wird bei Bestromung der Bremsspulenwicklung ein Magnetfeld erzeugt, das ein magnetisierbares Teil, beispielsweise eine Ankerscheibe aus Stahl, anzieht entgegen einer von einem Federelement entgegengesetzt wirkenden Federkraft.

Am Spulenträger 1 ist ein Aufnahmebereich 7 ausgebildet, in den ein Kontakthaken 6 einführbar ist und vorzugsweise einklipsbar ist. Am Kontakthaken ist ein abgehendes Kabel, vorzugsweise das Litzenkabel 8, welches an seinem äußeren Umfang eine Isolierung aufweist und aus mehreren einzelnen Litzendrähten zusammengesetzt ist, die gegeneinander nicht isoliert sind.

Der Kontakthaken 6 ist als Stanz-Biegeteil ausgeführt und wie in den Figuren 12 oder 13 der DE 10 2004 022 254 B4 gezeigt ausführbar. Somit ist an einer der Zungen des Kontakthakens 6 das Litzenkabel elektrisch verbindbar und an einer zweiten Zunge ein Endbereich des Wicklungsdrahtes 5 der Bremsspulenwicklung.

Die Wicklung der Bremsspule wird in einer ringnutförmigen Vertiefung des Spulenträgers aufgenommen und ist in der Figur 1 nicht gezeigt. Nur der aus dem Wicklungsbereich austretende und durch die V-förmige Ausnehmung 4 zum Positionieren durchführende Wicklungsdraht 2 ist gezeigt und ist um den Umlenkpfosten 20 zur Zugentlastung herumgewickelt. Somit ist die Spannung bei diesem vom Wicklungsbereich her führende Teil des Wicklungsdrahtes unter einer genügend hohen Zugspannung, so dass die Wicklung stabil erhalten bleibt, auch wenn der nachfolgende entlastete Bereich 5 des Wicklungsdrahtes zugentlastet ist. Dieser Bereich 5 ist an einem Begrenzungspfosten vorbei geführt und somit im vorgesehenen Raumbereich gehalten. Das Ende des Bereichs 5 ist an den Kontakthaken 6 heran geführt und elektrisch verbunden.

Beim Herstellen der elektrischen Verbindung ist der Kontakthaken 6 noch nicht eingeschoben in den Aufnahmebereich 7 für den Kontakthaken 6. Das Litzenkabel ist an einer zweiten Zunge des Kontakthakens 6 elektrisch verbunden. Der Begrenzungspfosten 10 begrenzt den Wicklungsdraht auch auf ein maximal erlaubtes Abwickeln um den Umlenkpfosten 20 herum. Insbesondere bleibt der Umlenkpfosten mindestens 270° am Umlenkpfosten umwickelt. Somit ist ein minimaler Bewickelungswinkel gesichert, so dass genügend starke Reibungskräfte zum Festhalten des Wicklungsdrahtes vorgehalten sind. Nach Ausführen der elektrischen Verbindung, beispielsweise durch Kontaktschweißen, wird der Kontakthaken 6 eingeschoben in den Aufnahmebereich 7.

Der Umlenkpfosten 20 ist an seinem axialen Endbereich mittels eines Begrenzungswandbereichs 3 abgeschlossen, so dass der Wicklungsdraht in dem vorgesehenen Bereich um den Umlenkpfosten 20 herum gehalten und begrenzt ist. Der Begrenzungswandbereich ist radial ausgedehnt.

Durch die axiale Ausdehnung des Umlenkpfostens 20 ist die radiale Erstreckung des Spulenträgers vermindert, also der Bauraum des Spulenträgers und somit der Bremsspule in radialer Richtung verringert. Der Umlenkpfosten 20 erstreckt sich dabei in axialer Richtung, also in Achsrichtung der Spulenwicklung, nur bis zum axialen Bereich des Kontakthakens. Somit ist sogar der Begrenzungswandbereichs 3 noch im axialen Bereich des Spulenträgers 1. Denn die Wandstärke des Begrenzungswandbereichs 3 ist kleiner als die Wandstärke des Spulenträgers im Bereich des Aufnahmebereichs 7.

Mittels dieser Ausrichtung des Umlenkpfostens 20 ist also eine besonders kompakte Ausführung der Bremsspule erreichbar.

Radial innerhalb des Umlenkpfostens 20 ist ein geschwungener Wandbereich bzw. eine Verstärkungsrippe 9 am Spulenträger 1 ausgebildet. Dabei ist einerseits mit wenig Material eine hohe Steifigkeit erreicht und andererseits das Werkzeug bei der Bewickelung des Umlenkpfostens 20 geführt. Somit ist eine sehr schnelle Bewickelung ausführbar und sogar eine fehlerfreie Bewickelung bei vibrierendem Spulenträger oder entsprechenden Abweichungen des Werkzeuges von seiner Sollbahn. Das Werkzeug weist hierbei einen Rohrbereich auf, aus dem der Wicklungsdraht austritt und um den Umlenkpfosten 20 bewickelt wird.

Der Begrenzungspfosten 10 sowie der Umlenkpfosten 20 als auch der Begrenzungswandbereich 3 und der Aufnahmebereich 7 sind am Spulenträger 1 einstückig ausführbar, da dieser als Kunststoffspritzgussteil ausgeführt ist.

Der Kontakthaken 6 ist auch als Hülse bezeichenbar.

Der Aufnahmebereich ist taschenartig ausgeführt, wobei in Umfangsrichtung an einer ersten Seite der Wicklungsdraht einführbar ist und an der anderen Seite die Litze.

Der Kontakthaken 6 weist Bereiche mit Widerhaken und Zungen auf, wobei mittels des Widerhakens eine kraft- und/oder formschlüssige Verbindung zum Spulenträger erreichbar ist.

Am Kontakthaken ist der abisolierte Endteil des Kabels, also blanke Litze, mit dem Kontakthaken verbunden und elektrisch verschweißt. Somit ist eine elektrisch sehr gut leitfähige Verbindung der Litze mit der Hülse geschaffen, die wegen der Zugentlastung hohe mechanische Belastungen erträgt.

In weiteren erfindungsgemäßen Ausführungsbeispielen wird der Aufnahmebereich 7 am Ende der Herstellung mit einer Vergussmasse vergossen. Somit ist ein mechanischer und auch chemischer Schutz erreichbar für die Spulenwicklung.

Die Spule ist insbesondere vorteilhaft als Bremsspule einer elektromagnetisch betätigbaren Bremse vorsehbar. Diese Bremse kann vorteiligerweise in einem Elektromotor eingesetzt und integriert vorgesehen werden.

### Bezugszeichenliste

- 1: Spulenträger
- 2: Wicklungsdraht, von der Bremsspulenwicklung kommend
- 3: Begrenzungswandbereich
- 4: V-förmige Ausnehmung zum Positionieren
- 5: Wicklungsdraht, entlastet
- 6: Kontakthaken
- 7: Aufnahmebereich für Kontakthaken 6 im Spulenträger 1
- 8: Litze mit Isolierung
- 9: geschwungener Wandbereich
- 10: Begrenzungspfosten
- 20: Umlenkpfosten zur Entlastung

## Patentansprüche

1. Spule, umfassend zumindest einen Spulenträger und einen Wicklungsdraht (2, 5), wobei eine axiale Richtung des Spulenträgers parallel zur Wicklungsachse der Spulenwicklung definiert ist, wobei der Wicklungsdraht (2, 5) aus einem Wicklungsbereich der Spule um einen Umlenkpfosten (20) herum, insbesondere zur Zugentlastung, und nachfolgend durch einen in radialer Richtung bezüglich der Wicklungsachse der Spulenwicklung nach innen und nach außen begrenzten Raumbereich geführt ist zu einem in einem Aufnahmebereich (7) des Spulenträgers aufgenommenen Kontakthaken (6), wobei die Begrenzung mittels der Ausformung des Spulenträgers (1) ausgeführt ist,
wobei zur Herstellung der radial außen vorgesehenen Begrenzung ein Begrenzungspfosten (10) am Spulenträger (1) ausgeformt ist,
wobei zur Herstellung der radial innen vorgesehenen Begrenzung eine geschwungen, also nicht geradlinig, verlaufende Verstärkungsrippe (9) am Spulenträger (1) ausgeformt ist,
wobei der Begrenzungspfosten (10) bezüglich der Spulenwicklung in Umfangsrichtung, also in Drahtführungsrichtung im durch den Umlenkpfosten zugentlasteten Bereich (5), zwischen Kontakthaken (6) und Umlenkpfosten (20) angeordnet und von diesen beabstandet ist,
wobei die Verstärkungsrippe in Umfangsrichtung, also in Drahtführungsrichtung im durch den Umlenkpfosten zugentlasteten Bereich (5), den von dem Begrenzungspfosten (10) in Umfangsrichtung überdeckten Bereich überdeckt und den Umfangswinkel zwischen der Umfangswinkelposition des Umlenkpfostens (20) und
der Umfangswinkelposition des Aufnahmebereichs (7) des Kontakthakens (6) überdeckt,
wobei der Begrenzungspfosten (10) sich in axialer Richtung erstreckt, also parallel zur Wicklungsachse der Spulenwicklung,
**dadurch gekennzeichnet, dass** der Umlenkpfosten (20) sich in axialer Richtung erstreckt und an seinem axialen Endbereich verdickt und/oder mit einem sich radial erstreckenden Begrenzungswandbereich ausgeführt ist, wobei der Umlenkpfosten (20) sich in axialer Richtung, also in Achsrichtung der Spulenwicklung, nur bis zum axialen Bereich des Kontakthakens im Aufnahmebereich (7) erstreckt, wobei der Begrenzungswandbereich (3) am axialen Endbereich des Umlenkpfostens (20) noch im axialen Bereich des Spulenträgers (1) angeordnet ist, wobei die Wandstärke des Begrenzungswandbereichs (3) kleiner als die Wandstärke des Spulenträgers im Bereich des Aufnahmebereichs (7) ist.

2. Spule nach Anspruch 1,
**dadurch gekennzeichnet, dass**
der Wicklungsdraht (2) aus dem Wicklungsbereich der Spule durch eine Kerbe oder radiale Vertiefung in einem Wandbereich des Spulenträgers (1) verlegt ist und somit zum Umlenkpfosten hin geführt ist.

3. Spule nach einem der vorangegangenen Ansprüche,
**dadurch gekennzeichnet, dass**
der Wicklungsdraht (5) mit dem Kontakthaken (6), also eine Hülse, elektrisch verbunden ist, insbesondere schweißverbunden ist, und am Kontakthaken (6) ein Litzenkabel elektrisch verbunden ist, insbesondere schweißverbunden ist.

4. Spule nach einem der vorangegangenen Ansprüche,
**dadurch gekennzeichnet, dass**
der Kontakthaken (6) in einer als Aufnahmebereich (7) ausgebildeten Ausnehmung des Spulenträgers (1) eingeschoben angeordnet ist.

5. Spule nach einem der vorangegangenen Ansprüche,
**dadurch gekennzeichnet, dass**
der Kontakthaken (6) einen oder mehrere verformbare Bereiche umfasst,
wobei zur Herstellung der elektrischen Verbindungen mit dem Wicklungsdraht (2) und/ oder einer Litze (8) ein jeweiliger verformbarer Bereich derart verformbar ist, dass eine kraftschlüssige Verbindung vorgesehen ist und ein Verschweißen ausführbar ist,
wobei der Kontakthaken (6) mindestens einen ersten, als Zunge ausgebildeten Bereich, umfasst, der als Auflage und/oder Führung für den Wicklungsdraht (2, 5) vorgesehen ist,
wobei der Kontakthaken (6) zumindest einen zweiten, als Zunge ausgebildeten Bereich, umfasst, der zum kraftschlüssigen Verbinden mit dem Wicklungsdraht (5) verformbar ist und zum Herstellen einer Schweißverbindung mit dem Wicklungsdraht (5) vorsehbar ist,
wobei der Kontakthaken (6) zumindest einen dritten, als Zunge ausgebildeten Bereich, umfasst, der zum Schweißverbinden mit der Litze (8) vorgesehen ist.

6. Spule nach einem der vorangegangenen Ansprüche,
**dadurch gekennzeichnet, dass**
der Kontakthaken (6) ein metallisches Stanz-Biegeteil ist.

7. Spule nach einem der vorangegangenen Ansprüche,
**dadurch gekennzeichnet, dass**
der Kontakthaken (6) zur Herstellung einer elektrischen Verbindung zwischen Wicklungsdraht (5) und einer elektrischen Leitung oder einer Litze (8) geeignet ausgeführt ist, und/oder dass
der Kontakthaken (6) im Spulenträger (1) kraftschlüssig und/oder formschlüssig befestigbar ist,
und/oder dass
der Kontakthaken (6) mindestens einen Widerhaken umfasst, insbesondere zum Einhaken in der als Aufnahmebereich ausgebildeten Ausnehmung, und/oder dass
der dritte Bereich des Kontakthakens gemäß Anspruch 5 auch zum kraftschlüssigen Verbinden mit der Litze verformbar ist, und/oder dass
der Kontakthaken (6) zumindest einen vierten, als Zunge ausgebildeten Bereich, umfasst, der zum kraftschlüssigen Verbinden mit einem Kabel verformbar ist und zum Herstellen einer Schweißverbindung mit der Litze (8) vorsehbar ist, und/oder dass
die Lackierung des Wicklungsdrahtes (2) beim Herstellen einer Schweißverbindung zumindest im Bereich der elektrischen Kontaktstelle entfernbar ist insbesondere durch das beim Herstellen der Schweißverbindung auftretende Erhitzen,
und/oder dass
die Bereiche des Kontakthakens (6) an einem Wandteil verbunden sind.

8. Spule nach einem der vorangegangenen Ansprüche,
**dadurch gekennzeichnet, dass**
die Spule einen Mittelabgriff umfasst.

9. Spule nach einem der vorangegangenen Ansprüche,
**dadurch gekennzeichnet, dass**
die Spule Vergussmasse umfasst und/oder die Spule Vergussmasse im Bereich eines als Aufnahmebereich des Kontakthakens ausgebildeten Kanals und/oder der Wicklung umfasst.

10. Bremse, insbesondere eines Elektromotors, mit einer Bremsspule, die als Spule nach einem der vorangegangenen Ansprüche ausgebildet ist.
**dadurch gekennzeichnet, dass**
die Spule eine Bremsspule einer Bremse ist.

## Claims

1. A coil, comprising at least a coil bobbin and a winding wire (2, 5), wherein an axial direction of the coil bobbin is defined parallel to the winding axis of the coil winding, wherein the winding wire (2, 5) is guided out of a winding region of the coil about a deflecting post (20), in particular for strain relief purposes, and subsequently through a spatial region, which is delimited inwards and outwards in the radial direction with respect to the winding axis of the coil winding to a contact hook (6), which is received in a receiving region (7) of the coil bobbin,
wherein the delimitation is carried out by means of the shaping of the coil bobbin (1),
wherein for producing the delimitation provided radially to the outside a delimiting post (10) is formed on the coil bobbin (1),
wherein for producing the delimitation provided radially to the inside a reinforcing rib (9) running in a curve, i.e. not rectilinearly, is formed on the coil bobbin (1),
wherein the delimiting post (10) with respect to the coil winding in the peripheral direction, i.e. in the wire guidance direction, in the region (5) which is relieved of strain by the deflecting post, is arranged between the contact hook (6) and deflecting post (20) and is spaced apart from these,
wherein the reinforcing rib in the peripheral direction, i.e. in the wire guidance direction, in the region (5) which is relieved of tension by the deflecting post, covers the region covered by the delimiting post (10) in the peripheral direction and covers the angle at circumference between the angle-at-circumference position of the deflecting post (20) and the angle-at-circumference position of the receiving region (7) of the contact hook (6),
wherein the delimiting post (10) extends in the axial direction, i.e. parallel to the winding axis of the coil winding,
**characterised in that** the deflecting post (20) extends in the axial direction and is embodied thickened and/or with a radially extending delimiting wall region on its axial end region,
wherein the deflecting post (20) extends in the axial direction, i.e. in the axial direction of the coil winding, only as far as the axial region of the contact hook in the receiving region (7),
wherein the delimiting wall region (3) on the axial end region of the deflecting post (20) is still arranged in the axial region of the coil bobbin (1), the wall thickness of the delimiting wall region (3) being less than the wall thickness of the coil bobbin in the region of the receiving region (7).

2. A coil according to Claim 1,
**characterised in that**
the winding wire (2) is laid out of the winding region of the coil through a notch or radial depression in a wall region of the coil bobbin (1) and thus is guided towards the deflecting post.

3. A coil according to one of the preceding claims,
**characterised in that**
the winding wire (5) is electrically connected, in particular connected by welding, to the contact hook (6), i.e. a sleeve, and a stranded wire cable is electrically connected, in particular connected by welding, to the contact hook (6).

4. A coil according to one of the preceding claims,
**characterised in that**
the contact hook (6) is arranged inserted in a cutout in the coil bobbin (1) formed as the receiving region (7).

5. A coil according to one of the preceding claims,
**characterised in that**
the contact hook (6) comprises one or more deformable regions,
wherein for producing the electrical connections with the winding wire (2) and/or a litz wire (8) a respective deformable region is deformable such that a non-positive connection is provided and welding can be carried out,
wherein the contact hook (6) comprises at least a first region, embodied as a tongue, which is provided as a bearing surface and/or guide for the winding wire (2, 5),
wherein the contact hook (6) comprises at least a second region, formed as a tongue, which is deformable for non-positive connection to the winding wire (5) and can be provided for producing a welded connection with the winding wire (5),
wherein the contact hook (6) comprises at least a third region, formed as a tongue, which is provided with the litz wire (8) for connection by welding.

6. A coil according to one of the preceding claims,
**characterised in that**
the contact hook (6) is a metallic stamped and bent part.

7. A coil according to one of the preceding claims,
**characterised in that**
the contact hook (6) is embodied suitably for producing an electrical connection between the winding wire (5) and an electrical line or a litz wire (8),
and/or **in that**
the contact hook (6) can be fastened in non-positive manner and/or in positive manner in the coil bobbin (1),
and/or **in that**
the contact hook (6) comprises at least one barb, in particular for hooking into the cutout formed as a receiving region,
and/or **in that**
the third region of the contact hook according to Claim 5 is also deformable for non-positive connection to the litz wire,
and/or **in that**
the contact hook (6) comprises at least a fourth region, formed as a tongue, which is deformable for non-positive connection to a cable and can be provided for producing a welded connection with the litz wire (8),
and/or **in that**
the paint coating of the winding wire (2) upon the production of a welded connection can be removed at least in the region of the electrical contact point, in particular by the heating occurring during the production of the welded connection,
and/or **in that**
the regions of the contact hook (6) are connected to a wall part.

8. A coil according to one of the preceding claims,
**characterised in that**
the coil comprises a centre tap.

9. A coil according to one of the preceding claims,
**characterised in that**
the coil comprises casting compound and/or the coil comprises casting compound in the region of a duct formed as a receiving region of the contact hook and/or of the winding,

10. A brake, in particular of an electric motor, with a brake coil which is designed as a coil according to one of the preceding claims,
**characterised in that**
the coil is a brake coil of a brake.

## Revendications

1. Bobine comprenant au moins un support et un fil métallique d'enroulement (2, 5), une direction axiale dudit support de la bobine étant définie parallèlement à l'axe de bobinage de l'enroulement de ladite bobine,
sachant que ledit fil métallique d'enroulement (2, 5) sort d'une zone d'enroulement de ladite bobine en enlaçant un mentonnet de déviation (20), notamment en vue du soulagement en traction, traverse ensuite une région spatiale délimitée vers l'intérieur et vers l'extérieur par rapport audit axe de bobinage de l'enroulement de ladite bobine, puis est guidé vers un crochet de contact (6) intégré dans une zone de réception (7) dudit support de la bobine,
la délimitation étant matérialisée au moyen de la configuration dudit support (1) de la bobine,
un mentonnet de délimitation (10) étant ménagé sur ledit support (1) de la bobine, en vue d'instaurer la délimitation prévue extérieurement dans le sens radial,
une nervure de renfort (9) présentant un tracé galbé, en conséquence non rectiligne, étant ménagée sur ledit support (1) de la bobine en vue d'instaurer la délimitation prévue intérieurement dans le sens radial,
sachant que ledit mentonnet de délimitation (10) est situé dans la direction périphérique, c'est-à-dire dans la direction du guidage du fil métallique, par rapport audit enroulement de ladite bobine, dans la région (5) à soulagement en traction conféré par le mentonnet de déviation, entre le crochet de contact (6) et ledit mentonnet de déviation (20), à distance desquels il est disposé,
sachant que dans la direction périphérique, c'est-à-dire dans ladite direction du guidage du fil métallique, ladite nervure de renfort coiffe, dans ladite région (5) à soulagement en traction conféré par le mentonnet de déviation, la région recouverte par le mentonnet de délimitation (10) dans ladite direction périphérique, et couvre l'angle périphérique entre l'emplacement angulaire périphérique dudit mentonnet de déviation (20) et l'emplacement angulaire périphérique de la zone (7) de réception du crochet de contact (6),
ledit mentonnet de délimitation (10) s'étendant dans la direction axiale, c'est-à-dire parallèlement audit axe de bobinage dudit enroulement de la bobine,
**caractérisée par le fait que**
le mentonnet de déviation (20) s'étend dans la direction axiale et présente, dans sa région extrême axiale, une réalisation épaissie et/ou une zone de paroi de délimitation s'étendant radialement,
sachant que, dans la direction axiale, c'est-à-dire dans la direction de l'axe de l'enroulement de la bobine, ledit mentonnet de déviation (20) s'étend uniquement jusqu'à la région axiale du crochet de contact, dans la zone de réception (7),
la zone de paroi de délimitation (3) demeurant encore située dans la région axiale du support (1) de la bobine, au niveau de ladite région extrême axiale dudit mentonnet de déviation (20), l'épaisseur de paroi de ladite zone de paroi de délimitation (3) étant moindre que l'épaisseur de paroi dudit support de la bobine dans la région de ladite zone de réception (7).

2. Bobine selon la revendication 1,
**caractérisée par le fait que**
le fil métallique d'enroulement (2), sortant de la zone d'enroulement de ladite bobine, est mis en place par l'intermédiaire d'une encoche ou d'une creusure radiale pratiquée dans une zone de paroi du support (1) de ladite bobine, et est ainsi guidé vers le mentonnet de déviation.

3. Bobine selon l'une des revendications précédentes,
**caractérisée par le fait que**
le fil métallique d'enroulement (5) est raccordé électriquement, notamment relié par soudage au crochet de contact (6) se présentant ainsi comme une douille, un câble toronné étant raccordé électriquement, notamment relié par soudage au niveau dudit crochet de contact (6).

4. Bobine selon l'une des revendications précédentes,
**caractérisée par le fait que**
le crochet de contact (6) est encastré dans un évidement du support (1) de ladite bobine, réalisé en tant que zone de réception (7).

5. Bobine selon l'une des revendications précédentes,
**caractérisée par le fait que**
le crochet de contact (6) compte une ou plusieurs région(s) déformable(s),
sachant que, pour établir les connexions électriques avec le fil métallique d'enroulement (2) et/ou avec un toron (8), une région déformable respective peut être déformée de façon telle qu'une liaison par engagement positif soit prévue, et qu'un soudage puisse être effectué,
ledit crochet de contact (6) incluant au moins une première région réalisée sous la forme d'une languette prévue en tant qu'appui et/ou que guide affecté au fil métallique d'enroulement (2, 5),
ledit crochet de contact (6) incluant au moins une deuxième région réalisée sous la forme d'une languette qui peut être déformée en vue de la liaison par engagement positif avec le fil métallique d'enroulement (5), et peut être prévue afin d'instaurer une liaison soudée avec ledit fil métallique d'enroulement (5),
ledit crochet de contact (6) incluant au moins une troisième région réalisée sous la forme d'une languette prévue pour la liaison soudée avec ledit toron (8).

6. Bobine selon l'une des revendications précédentes,
**caractérisée par le fait que**
le crochet de contact (6) est une pièce métallique produite par estampage-pliage.

7. Bobine selon l'une des revendications précédentes,
**caractérisée par le fait que**
le crochet de contact (6) est de réalisation appropriée pour établir une connexion électrique entre le fil métallique d'enroulement (5) et un conducteur électrique, ou un toron (8),
et/ou que
ledit crochet de contact (6) peut être fixé par engagement positif et/ou par complémentarité de formes dans le support (1) de ladite bobine,
et/ou que
ledit crochet de contact (6) comporte au moins un ardillon destiné, en particulier, à l'accrochage dans l'évidement réalisé en tant que zone de réception,
et/ou que
la troisième région dudit crochet de contact, conforme à la revendication 5, peut également être déformée en vue de la liaison par engagement positif avec ledit toron, et/ou que
ledit crochet de contact (6) inclut au moins une quatrième région réalisée sous la forme d'une languette qui peut être déformée en vue de la liaison par engagement positif avec un câble, et peut être prévue afin d'instaurer une liaison soudée avec ledit toron (8),
et/ou que
le laquage du fil métallique d'enroulement (2) peut être éliminé au stade de l'instauration d'une liaison soudée, au moins dans la région de la zone de contact électrique, en particulier sous l'effet du chauffage intervenant lors de ladite instauration de la liaison soudée,
et/ou que
lesdites régions dudit crochet de contact (6) sont reliées au niveau d'une partie de paroi.

8. Bobine selon l'une des revendications précédentes,
**caractérisée par le fait que**
ladite bobine inclut une prise médiane.

9. Bobine selon l'une des revendications précédentes,
**caractérisée par le fait que**
ladite bobine inclut une masse de scellement et/ou ladite bobine inclut une masse de scellement dans la région d'un canal réalisé en tant que zone de réception du crochet de contact, et/ou de l'enroulement.

10. Frein équipant notamment un moteur électrique et muni d'une bobine réalisée en tant que bobine conforme à l'une des revendications précédentes,
**caractérisé par le fait que**
la bobine est une bobine de freinage d'un frein.
